# EUROPEAN PATENT SPECIFICATION

(11) **EP 2 441 337 B1**
(45) Date of publication and mention of the grant of the patent: **07.01.2015**
(21) Application number: 11184446.0
(22) Date of filing: 07.10.2011
(51) Int. Cl.: A41D 19/00, A62D 5/00, B32B 27/08, B32B 27/28, C08J 5/02

(54) **Chemical resistant, mechanical resistant, anti-static glove**
Chemikalienbeständiger, mechanisch widerstandsfähiger, antistatischer Handschuh
Gant antistatique doté de résistance aux produits chimiques et de résistance mécanique

(30) Priority: 15.10.2010 US 393712 P; 21.12.2010 US 974745
(43) Date of publication of application: 18.04.2012
(73) Proprietor: Honeywell International Inc., Morristown, NJ 07962-2245 (US)
(72) Inventor: Piesker, Andrea Barbara, Morristown, NJ New Jersey 07962-2245 (US); Hansen, Claudia, Morristown, NJ New Jersey 07962-2245 (US)
(74) Representative: Buckley, Guy Julian

(56) References cited:
- DE-U1- 20 021 226
- US-A- 5 059 477
- US-A1- 2007 054 577
- US-A1- 2008 306 200

## Description

### TECHNICAL FIELD

The present application pertains to chemical and mechanical resistant, anti-static gloves. More particularly, the present application relates to comfortable chemical and mechanical resistant gloves that have an anti-static discharge quality and are made by the use of a dip-line process.

### BACKGROUND

Although there are several types of chemical resistant gloves on the market that claim to be anti-static, most do not conform to any standard, such as that of requiring an electrical discharge/vertical resistance of less than 1.0 x 10⁸ Ω at a relative humidity of about 50% at 23°C. Also, many so-called anti-static gloves suffer the disadvantage of being cumbersome due to the presence of electrical lead wires and other metal attachments that disperse electrical charge.

US 2007/005 4577 discloses an electro conductive woven and nonwoven fabric and method of manufacturing thereof. US 2008/030 6200 discloses antistatic gloves and processes for making antistatic gloves. The DE 200 21 226 discloses electrically conductive gloves. US 505 9477 discloses a multi-layer polymer glove.

Historically, in order to obtain the necessary chemical resistance, various membranes impervious to chemical agents were laminated or heat-sealed together to produce a chemical resistant glove, which then had metal wire or mesh attached to the glove to provide the electrostatic discharge. These types of gloves made hand movement difficult for the wearer. Therefore, there exists a need for a chemical resistant, anti-static glove that is comfortable.

### BRIEF DESCRIPTION OF THE DRAWINGS

In the drawings forming a portion of this disclosure:
Fig. 1 schematically demonstrates a glove that can be formed according to the present application; and
Fig. 2 is a depiction of an exemplary cross-section of the glove of Figure 1.

The present invention in its various embodiments is as set out in the appended claims.

### DETAILED DESCRIPTION OF THE EMBODIMENTS

While the application is susceptible of embodiment in many different forms, there are shown in the drawing and will be described herein in detail specific embodiments thereof with the understanding that the present disclosure is to be considered as an exemplification of the principles of the application and is not intended to limit the application to the specific embodiments illustrated.

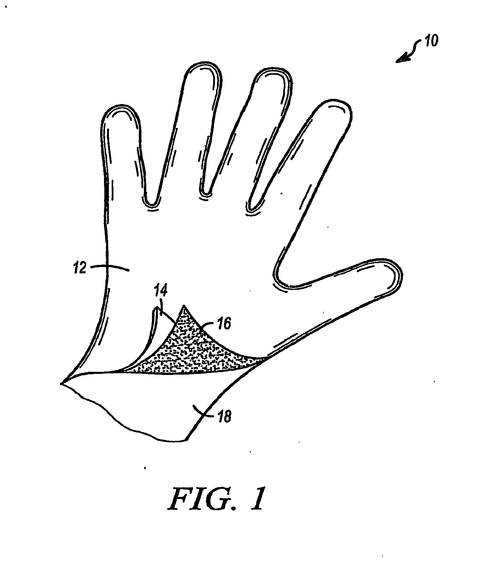

The present application relates to a skin-covering, which has improved resistance to chemical permeation and improved electrical discharge. The present application includes a method of forming such a skin-covering. The skin-covering can be a five-fingered glove, but it also can be a mitten having only a thumb or a mitten having any combination of fingers present from zero to five. (See Figure 1) Such skin-covering is not limited to a glove or mitten, and can comprise an apron, coat, hat, scarf, shoe or sock.

The glove achieves a continuous discharge of electricity via the wearer's body so that spark formation and the danger of explosion is considerably less than that with an ordinary chemically protective glove. The chemical resistant and anti-static nature of the glove results from the presence of chemical resistant polymers and conducting polymers in the glove.

The glove is comprised of one layer, which is a conducting polymer layer. The conducting polymer layer comprises a mixture of an anionic polymer and a chemical resistant polymer. The anionic polymer is a polythiophene, poly(3,4-ethylenedioxythiophene)-poly(styrenesulfonate). The anionic polymer can be present in the conducting polymer layer at about 1 to about 70 percent by weight.

The chemical resistant polymer is nitrile latex, The conducting polymer layer comprises a mixture of poly(3,4-ethylenedioxythiophene)-poly(styrenesulfonate) and nitrile latex.

The method can also encompass the addition of one or more additives wherein the additives comprise an adhesive, a defoamer, a thickener, a stabilizer, a colorant, an anti-microbial agent, fibers, a fragrance or mixtures thereof.

The chemical resistant polymer comprises nitrile latex.

The conducting polymer layer of the glove is a mixture of an anionic polymer and a chemical resistant polymer. The anionic polymer comprises poly(3,4-ethylenedioxythiophene)-poly(styrenesulfonate).

The chemical resistant polymer layer can be a nitrile latex layer.

The glove can further comprise one or more additives wherein the additives comprise an adhesive, a colorant, an anti-microbial agent, a fiber, a fragrance or mixtures thereof.

Optionally, the glove also comprises a donning layer, which lies next to the skin. The donning layer can be natural fibers, synthetic fibers, polyester, polyurethane, nitrile latex, chloroprene latex, polyvinyl alcohol, butyl latex, fluoric latex, or latex rubber. In one embodiment, the donning layer is a textile material, such as a flocked cotton liner.

It is to be understood that there is no set limitation as to the number of layers that the glove can have so long as the glove is comfortable and flexible enough for its intended use. There is also no limitation as to the presence of duplicate layers. There is no restriction as to the spatial arrangement of the layers.

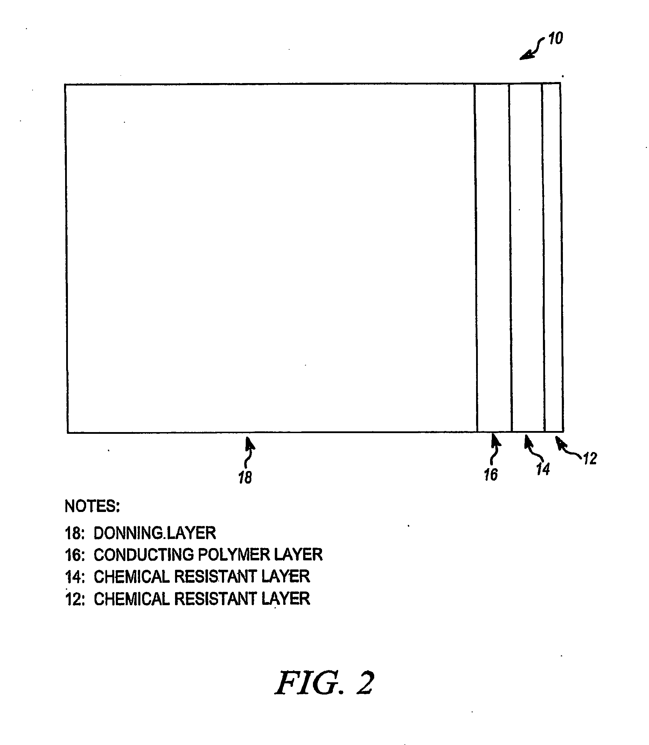

An embodiment of the glove (10) is made of multiple layers and is comprised of a donning layer (18) of cotton (flock liner) to be worn next to the skin, one conducting polymer layer (16) of a mixture of nitrile latex and poly(3,4-ethylenedioxythiophene)-poly(styrenesulfonate), and two chemical resistant polymer layers (12, 14) of nitrile for a total of four layers. (See Figure 2)

The thickness of the layers ranges from about 0.01 mm to about 3 mm for each of the chemical resistant polymer layer and the conducting polymer layer. The thickness of the donning layer is in the range of about 0 mm to about 6 mm.

The present application also contemplates a method of forming a chemical resistant, anti-static glove. The chemical resistant and anionic polymer layers are included that can be dipped on standard latex type dip lines.

The method of forming a chemical resistant anti-static glove comprises dipping a hand-shaped former into a mixture of nitrile latex and poly(3,4-ethylenedioxythiophene)-poly(styrenesulfonate) so that a continuous layer of the mixture is deposited on the former, then removing the coated former from the mixture; dipping the coated former into nitrile latex so that a continuous layer of nitrile latex is deposited on the coated former and removing the former from the nitrile latex dipping solution; dipping the former into nitrile foam so that a continuous layer of nitrile foam is deposited on the former and removing the former from the nitrile foam dipping solution. The glove can then be stripped from the former. The paired dipping and removing steps can be independently repeated multiple times to form multiple layers, as desired. In addition, a donning layer can be added.

The method can also encompass the addition of one or more additives wherein the additives comprise an adhesive, a defoamer, a thickener, a stabilizer, a colorant, an anti-microbial agent, fibers, a fragrance or mixtures thereof.

## Claims

1. A chemical resistant anti-static glove comprising:
at least one layer of a mixture of nitrile latex and poly(3,4-ethylenedioxythiophene)-poly(styrenesulfonate);
at least one nitrile latex layer; and
at least one donning layer.

2. The glove of claim 1 wherein the donning layer comprises at least one layer of polyester, polyurethane, natural fibers, synthetic fibers, nitrile latex, chloroprene latex, polyvinyl alcohol, butyl latex, fluoric latex, latex rubber or mixtures thereof.

3. The glove of claim 1 further comprising one or more additives wherein the additives comprise an adhesive, a colorant, an anti-microbial agent, a fiber, a fragrance or mixtures thereof.

## Patentansprüche

1. Chemikalienbeständig antistatischer Handschuh, umfassend:
mindestens eine Schicht einer Mischung aus Nitrillatex und Poly(3,4-ethylendioxythiophen)poly(styrolsulfonat),
mindestens eine Nitrillatexschicht und
mindestens eine das Anziehen des Handschuhs erleichternde Schicht.

2. Handschuh nach Anspruch 1, bei dem die das Anziehen des Handschuhs erleichternde Schicht mindestens eine Schicht aus Polyester, Polyurethan, Naturfasern, Kunstfasern, Nitrillatex, Chloroprenlatex, Polyvinylalkohol, Butyllatex, Fluorharzlatex, Latexkautschuk oder deren Mischungen umfasst.

3. Handschuh nach Anspruch 1, ferner umfassend ein Additiv oder mehrere Additive, wobei die Additive einen Klebstoff, ein Farbmittel, einen antimikrobiellen Wirkstoff, eine Faser, einen Duftstoff oder deren Mischungen umfassen.

## Revendications

1. Gant antistatique et résistant aux substances chimiques, comprenant :
au moins une couche d'un mélange de nitrile/latex et de poly(3,4-éthylène dioxythiophène)-poly(sulfonate de styrène) ;
au moins une couche de nitrile/latex ; et
au moins une couche d'enfilage.

2. Gant selon la revendication 1, dans lequel la couche d'enfilage comprend au moins une couche de polyester, de polyuréthane, de fibres naturelles, de fibres synthétiques, de nitrile/latex, de chloroprène/ latex, d'alcool polyvinylique, de butyl/latex, de latex fluoré, de latex de caoutchouc, ou des mélanges de ceux-ci.

3. Gant selon la revendication 1, comprenant en outre un ou plusieurs additifs, où les additifs comprennent un adhésif, un colorant, un agent antimicrobien, une fibre, un parfum, ou des mélanges de ceux-ci.
